# EUROPEAN PATENT APPLICATION

(11) **EP 4 510 077 A1**
(43) Date of publication of application: **19.02.2025**
(21) Application number: 23787428.4
(22) Date of filing: 07.03.2023
(51) Int. Cl.: G06T 11/00, G06T 5/00

(54) **IMAGE PROCESSING METHOD AND APPARATUS, ELECTRONIC DEVICE, AND STORAGE MEDIUM**

(30) Priority: 12.04.2022 CN 202210382300
(71) Applicant: Beijing Zitiao Network Technology Co., Ltd., Beijing 100190 (CN)
(72) Inventor: DIAO, Junyu, Beijing 100086 (CN); ZHOU, Xubin, Beijing 100086 (CN)
(74) Representative: Dentons UK and Middle East LLP
(86) International application number: PCT/CN2023/079974
(87) International publication number: WO 2023/197780

(57) **Abstract**

The embodiments of the present disclosure disclose an image processing method and apparatus, an electronic device, and a storage medium. The method comprises: in response to a special effect triggering operation for starting a target image special effect, obtaining an image to be processed corresponding to the target image special effect; and in response to detecting that said image comprises a first target object and a second target object, displaying the color of the first target object on the second target object.

## Description

This application claims the priority of Chinese Patent Application No.202210382300.5 filed in Patent Office of China on April 12, 2022, the entire contents of which are incorporated by reference in the application.

### TECHNICAL FIELD

Embodiment of the present disclosure relate to the technical field of image processing, for example, a method and apparatus of image processing, an electronic device and a storage medium.

### BACKGROUND

With the rapid development of Internet new media technology, short videos or images, as a way of spreading Internet content, are deeply loved by the user.

At present, the display content in short videos or images can include many display objects such as a person, an object and a background, and respective display objects have its own corresponding color attributes, which are independently displayed. However, the display mode of related technologies is relatively simple, which cannot meet the diverse needs of users.

### SUMMARY

In a first aspect, an embodiment of the present disclosure provides a method of image processing, including:
in response to an effect triggering operation for enabling a target image effect, acquiring an image to be processed corresponding to the target image effect; and
in response to detecting the image to be processed comprising a first target object and a second target object, displaying a color of the first target object on the second target object.

In a second aspect, an embodiment of the present disclosure also provides an apparatus of image processing, including:
an image to be processed acquisition module, configured to in response to an effect triggering operation for enabling a target image effect, acquire an image to be processed corresponding to the target image effect; and
a color display module, configured to in response to detecting the image to be processed comprising a first target object and a second target object, display a color of the first target object on the second target object.

In a third aspect, an embodiment of the present disclosure also provides an electronic device, including:
one or more processors;
a storage device arranged to store one or more programs,
when the one or more programs are executed by the one or more processors, the one or more processors are caused to implement the method of image processing of any embodiment provided by the present disclosure.

In the fourth aspect, the embodiment of the present disclosure also provides a computer-readable storage medium, having stored thereon a computer program which, when executed by a processor, implements the method of image processing of any embodiment provided by the present disclosure.

### BRIEF DESCRIPTION OF DRAWINGS

The following is a brief introduction to the drawings needed to describe the embodiments.
Fig. 1 is a flow chart of a method of image processing provided by Embodiment 1 of the present disclosure;
Fig. 2 is a flow chart of a method of image processing provided by Embodiment 2 of the present disclosure;
Fig. 3 is a flow chart of a method of image processing provided by Embodiment 3 of the present disclosure;
Fig. 4 is a schematic diagram for comparing the result of an image to be processed before and after processing provided by the present disclosure;
Fig. 5 is a schematic structural diagram of an apparatus of image processing provided by Embodiment 4 of the present disclosure;
Fig. 6 is a schematic structural diagram of an electronic device provided by Embodiment 5 of the present disclosure.

### DETAILED DESCRIPTION

Embodiments of the present disclosure are described in more detail below with reference to the drawings. Although certain embodiments of the present disclosure are shown in the drawings, the present disclosure may be achieved in various forms and should not be construed as being limited to the embodiments described here. On the contrary, these embodiments are provided to understand the present disclosure more clearly and completely. The drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that the concepts such as "first" and "second" mentioned in the present disclosure are only used to distinguish different apparatuses, modules or units, and are not intended to limit orders or interdependence relationships of functions performed by these apparatuses, modules or units. It should be noted that modifications of "one" and "more" mentioned in the present disclosure are schematic rather than restrictive, and unless otherwise explicitly stated in the context, it should be understood as "one or more".

Names of messages or information exchanged among multiple apparatuses in the embodiment of the present disclosure are only used for illustrative purposes and are not used to limit the scope of these messages or information.

### Embodiment 1

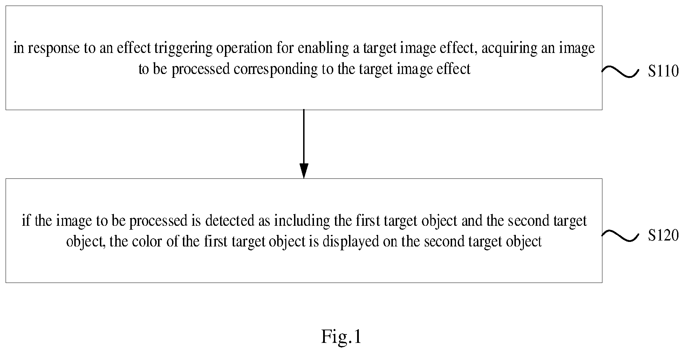

Fig. 1 is a flow chart of a method of image processing provided by Embodiment 1 of the present disclosure. This embodiment can display the colors of the target objects in the image to be processed in a diversified way according to the responded target image effect before displaying images. This method can be implemented by an apparatus of image processing, which can be implemented by software and/or hardware and can be configured in a terminal and/or a server to implement the method of image processing in the embodiment of the present disclosure.

As shown in Fig. 1, the method of this embodiment can include:
S110: in response to an effect triggering operation for enabling a target image effect, acquiring an image to be processed corresponding to the target image effect.

The target image effect can have a result of displaying the color of the target object in the image to be processed in diversity. For example, the target image effect can change the display color of the target object into a user-defined color, can change the display color of the target object into a color randomly selected from a preset color library , or change the display color of the target object into a color containing other objects in the image, thus increasing the diversity and freedom of the color of the target object in the image to be processed through the target image effect.

In this embodiment, the effect triggering operation is an operation for enabling the target image effect. The effect triggering operation includes two types of the contact operation and the non-contact operation.
(1) When the effect triggering operation is the contact operation, the effect triggering control, such as a button and a slider, can be displayed on the application display interface of the user terminal. The effect triggering control corresponds to the effect name of the target image effect. The user uses the effect triggering control, to click the button or slide the slider to complete the effect triggering operation so as to start the target image effect. For example, when the user terminal is a touch screen terminal, the user can directly click or slide the finger to select the position corresponding to the effect triggering control on the screen. When the user terminal is a non-touch screen terminal, an operation instruction can be sent to the user terminal through an external input device such as a mouse and a keyboard, so that the effect triggering control is selected, thereby achieving the effect triggering operation.

In order to display the image effect more vividly, the effect triggering control corresponding to the image effect can be displayed in the form of effect animation, showing the image change before and after using the image effect. For example, the displayed image effect can include the effect of replacing the color of the second instance object by the color of the first instance object. For example, if the color of the first instance object is white and the color of the second instance object is red, the changing process of the first instance object from white to red of the second instance object can be displayed when the effect animation is used to display the effect triggering control, and the color of the second instance object remains unchanged; or, each image effect can also include an effect of two objects exchanging colors. When the effect triggering control is displayed by an effect animation, the changing process of color exchange between the first instance object and the second instance object can be displayed, so that the user can intuitively and clearly understand the function of the image effect.

In an example, the basic operation control displayed on the application display interface can also be associated with the target image effect, and the target image effect can be enabled when the basic operation control is triggered. For example, the basic operation control can include at least one selected from a group consisting of a shooting image control, an uploading image control and a calling image control. When the basic operation control associated with the target image effect is operated, it is equivalent to complete the effect triggering operation, and the target image effect can be enabled. For example, a "shoot" floating button is displayed on the application display interface, the floating button being associated with the target image effect. When an image is shot by clicking the "shoot" floating button, the shot image is determined as an image to be processed, and the target image effect needs to be enabled for image processing before being displayed.

(2) When the effect triggering operation is a non-contact operation, it can be divided into the gesture recognition operation and/or the voice control operation. The user can make an action according to the gesture indicated by the application display interface, and when the user terminal detects the action, the effect triggering operation is completed; the user can also control the user terminal to implement the effect triggering operation through voice, for example, when it is detected that the user issues the voice instruction of "enable the target image effect", the effect triggering operation is completed.

For example, the image to be processed is an image that needs to be operated by applying the target image effect, and the image to be processed can be directly acquired through an image collector, which includes a device such as, a video camera, a camera, a mobile phone with shooting function, a computer. The image stored in the user terminal can also be uploaded to obtain the image to be processed; it is also possible to establish communication connection with other devices and share images stored in the other devices as the images to be processed.

In an embodiment, the implementation of acquiring the image to be processed corresponding to the target image effect can include:
acquiring an image uploaded or shot in a preset shooting mode by a user for applying the target image effect, as the image to be processed corresponding to the target image effect; or,
acquiring each image frame in a video uploaded or recorded in real time by a user for applying the target image effect, as the image to be processed corresponding to the target image effect; or,
acquiring an image containing at least one of the first target object or the second target object in a video uploaded or recorded in real time by a user for applying the target image effect, as the image to be processed corresponding to the target image effect.

In the first mode, the preset shooting mode is the mode of collecting images to be processed, and the user can select different shooting modes by customizing in advance; it can also adopt the preset default shooting mode. For example, according to the collection time, the preset shooting mode can be divided into the timed shooting and the real-time shooting; according to the mode of image collection, the preset shooting mode can be divided into at least one of the panoramic shooting, the portrait shooting and the night scene shooting; according to the trigger type, the preset shooting mode can be divided into at least one selected from the group consisting of the click shooting, the voice control shooting and the action recognition shooting.

For example, an image uploaded or shot in a preset shooting mode by a user after the target image effect is enabled can be determined as the image to be processed. When the user uploads or shoots images, there can be many times of shooting and uploading, etc., so as to provide multiple images to be processed; in order to avoid omission when acquiring the image to be processed, the image uploaded or shooting in a preset shooting mode by the user who meet the preset conditions can be acquired. For example, the preset condition can be an image obtained after the target image effect is enabled and before the upload or shooting end operation is executed, and the preset condition can also be an image obtained within a preset time period after the target image effect is enabled. By acquiring images that meet the preset condition, it is ensured that the images to be processed can be obtained accurately and comprehensively.

In an example, a number of images to be processed can be at least one. When only one image uploaded or shot by the user is acquired, the image can be determined as the image to be processed. When a plurality of images are acquired, each of the images can be used as the image to be processed. The similarity between the images can also be determined. If the similarity is greater than a preset similarity threshold, it can be understood that the images uploaded by the user are images in the same scene, and the image with the highest definition and the best color display result is selected as the image to be processed.

In the second mode, a video uploaded or recorded in real time by the user for applying the target image effect can be acquired, and each image frame of the video is extracted as the image to be processed corresponding to the target image effect.

For example, it is also possible to determine a partial number of image frames in the video to determine as the images to be processed. For example, it can be determined as an image to be processed according to a specific image frame in the video specified by the user in advance; one or more images can also be extracted from the video according to the preset extraction rule and determined as the images to be processed. The preset extraction rule can be extracting at equal time intervals, such as extracting an image frame every 1 second; the preset extraction rule can also be extracting at equal frame intervals, such as once every 5 frames, or randomly; by extracting a portion of image frame, the data processing amount is reduced.

In an example, the type of mode of determining a portion of frames in a video as the images to be processed further includes: acquiring an image containing the first target object and/or the second target object uploaded or recorded in real time by a user for applying the target image effect, as the image to be processed corresponding to the target image effect. In this way, the target object needs to be preset, and the target object is the component object for applying the target image effect in the image to be processed. The number of target objects can be one or more, which can be at least one selected from a group consisting of a plant, an animal, a character and an item in the image to be processed; it can also be a local component part of the animal, the character and the item.

In an embodiment, the target object includes a first target object and a second target object, which can be different components in the image to be processed. The color of the first target object can be displayed on the second target object through the target image effect. Based on the preset first target object and second target object, the image containing the first target object and/or the second target object in the acquired video uploaded or recorded in real time by the user can be used as the image to be processed.

S120. if the image to be processed is detected as including the first target object and the second target object, the color of the first target object is displayed on the second target object.

In this embodiment, the specific content of the first target object and the second target object can be preset, and the setting mode can include that the user presets the specific content of the second target object of the first target object, and/or the user presets the selection conditions of the first target object and the second target object and determines the first target object and the second target object according to the selection conditions.

For example, the user can directly input the specific content and/or selection conditions of the object to the user terminal through the application setting function and can also preset the selection conditions or the specific content of the object through the alternative object information and/or alternative selection conditions displayed on the application interface.

For example, in response to an effect triggering operation with a target image effect, alternative information such as respective alternative names and alternative types of the first target object and the second target object are displayed on the application display interface, and the alternative information corresponding to the first target object selected by the user is used as the first target object and the alternative information corresponding to the second target object selected by the user is used as the second target object. Alternative types can include at least one selected from the group consisting of an animal type, a plant type, a character type and an item type, the alternative names can include a face, a tree, a sky, etc., and the alternative information can include information such as an area, a shape, a size, a color, etc. of alternative objects. In response to the effect triggering operation of the target image effect, the alternative selection conditions of the first target object and the second target object can also be displayed on the application display interface. For example, the alternative selection conditions can include using the plant in the image to be processed as the first target object and using the part with the largest area in the image to be processed as the second target object; the alternative selection conditions can also include determining that the rule can also be to use a circular item in the image to be processed as the first target object, and a square item in the image to be processed as the second target object, etc.

It should be noted that the first target object can be the image subject included in the image to be processed, or at least one preset candidate object corresponding to the target image effect. When the first target object can be the image subject included in the image to be processed, the user can select the first target object from the displayed image to be processed after acquiring the image to be processed or can determine the first target object according to the preset selection conditions. When the preset candidate object corresponding to the target image effect are two or more objects with different colors, the first target object can be determined by a user-defined way. For example, at least one candidate object control of the name, the logo, the image and the color, etc. of each candidate object can be displayed on the application display interface. When one of the candidate object controls is detected as being triggered, the corresponding candidate object is determined as the first target object. In order to increase the diversity and flexibility of the color of the first target object, the input box can be directly displayed on the application display interface, so that the user can directly input the name, the logo and other information, etc. of the first target object, or the desired RGB color value of the first target object can be input in the input box, and the object corresponding to the RGB color value can be determined as the first target object.

In order to illustrate various selections for the first target object and the second target object, in this embodiment, the first target object can include at least one selected from the group consisting of a hand-held object, a salient object and an image subject belonging to a first preset subject type in the image to be processed.

The hand-held object is an item in contact with the user's hand. When the user's hand touches multiple items, one of the items can be selected as the first target object, such as selecting the item with the largest area as the target object. The salient object can include the item with area larger than a preset area threshold, such a wall, ground, lawn, a desk, a window, a bed. The preset area threshold can be determined according to the area of the acquired image to be processed, and the larger the area of the image to be processed, the larger the preset area threshold can be.

For example, an image subject belonging to a first preset subject type can also be determined as the first target object. The first preset subject type can be classified from many aspects, such as the external shape of the target object, and the image subject belonging to the first preset subject type can include image subjects with square, circle, star, ring and other shape; or from the color aspect of the target object to classify, the image subject belonging to the first preset subject type can be an image subject containing a cold color and/or a warm color; or from the aspect of the object attribute of the target object to classify, the image subject belonging to the first preset subject type can include the image subject belonging to a fruit, a clothes or a building. For example, any object that belongs to the first preset subject type and is the image subject in the image to be processed can be set as the first target object.

In an example, the second target object includes at least one selected from the group consisting of the body part of the target user in the image to be processed, the clothing of the target user, the background region of the image to be processed, and the image subject belonging to the second preset subject type. Among them, the body part of the target user can include parts such as hair, a face, facial features, a neck and a hand, and the clothing can include items such as clothes, a pant, a necklace, a backpack; the background area can be a region except the target user, such as a wall, a building, a ground, a scenery. Moreover, the second target object can also be an image subject belonging to the second preset subject type, which can be the same as or different from the first preset subject type.

For example, after acquiring the image to be processed, based on the specific contents of the first target object and the second target object determined in advance, the image to be processed is detected by a preset recognition algorithm to determine whether the image to be processed contains the set first target object and second target object. It is also possible to train the neural network model through the sample processing image in advance, so that the trained neural network model can recognize the first target object and the second target object in the sample processing image. The image to be processed is input into the neural network model which is trained in advance for image recognition, and whether the image to be processed contains the first target object and the second target object is determined based on the output result of the neural network model.

When the image to be processed is detected as containing the first target object and the second target object, the first target object and the second target object can be segmented by a preset segmentation algorithm or a pre-trained segmentation model, and the color of the first target object can be extracted and displayed on the second target object.

For example, when extracting the color of the first target object, it can be determined whether the first target object contains only one color, and if it contains only one color, the unique color can be determined as the color of the first target object. If the first target object includes two or more colors, in order to reduce the calculation amount and improve the efficiency of color replacement, a pixel point can be determined in the first target object, and the color corresponding to the pixel point can be used as the color of the first target object.

For example, a pixel point can be randomly determined, or a pixel point meeting a preset condition can be determined in the first target object, and the color corresponding to the pixel point can be determined as the color of the first target object. For example, the preset condition can be a pixel point corresponding to the color with the largest difference in color values of the second target object; it can also be the pixel point farthest from the first target object in the second target object; the color of the first target object can also be determined according to the color corresponding to the pixel position of the first target object specified by the user, and the color can be extracted and displayed on the second target object.

In order to comprehensively consider the color characteristics of the first target object and extract the characteristics of the first target object, all colors contained in the first target object can also be displayed in the second target object. For example, the color values at the corresponding pixel positions can be determined in sequence according to the pixel arrangement order of the first target object, and the colors corresponding to the color values can be displayed at the corresponding pixel positions of the second target object. In an example, the color value can be an RGB color mode value. When the area of the first target object is larger than that of the second target object, the color of the second target object can be filled without extraction. When the area of the first target object is smaller than that of the second target object, after traversing all the pixels of the first target object, the color in the pixel position of the first target object can be repeatedly extracted and displayed to the pixel position of the second target object where no color is added.

When the first target object and/or the second target object are not detected in the image to be processed, there is no target object for the target image effect, and the operation of the effect cannot be implemented. In order to prompt the user that the target image effect cannot be completed in time, the prompt information can be displayed on the application display interface, or the target image effect operation failure can be prompted through voice playback. In an example, the reasons for the effect failure can also be displayed or voiced. For example, in the application display interface, the words "No applicable object is detected, and it is suggested to change the image" are displayed for prompt.

In this embodiment, the image to be processed corresponding to the target image effect is acquired when the effect triggering operation of enabling the target image effect is triggered, and when the image to be processed is detected as including the first target object and the second target object, the display color of the second target object is changed by displaying the color of the first target object on the second target object, thus avoiding the boring and single image display mode in the related art, realizing the purpose of enriching the display color of the target object based on the target image effect, and improving the image quality.

### Embodiment 2

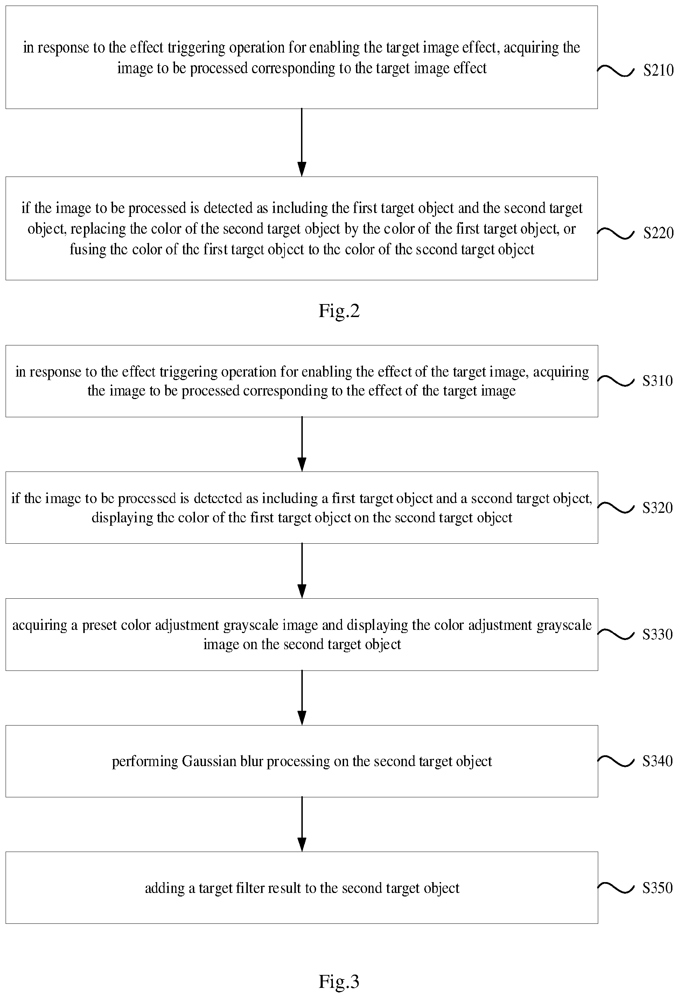

Fig. 2 is a flow chart of a method of image processing provided by Embodiment 2 of the present disclosure. This embodiment is based on any embodiment of the present disclosure, the displaying the color of the first target object on the second target object, includes: replacing the color of the second target object with the color of the first target object; or fusing the color of the first target object to the color on the second target object. The explanations of terms that are the same as or corresponding to the above-mentioned embodiments are not repeated here.

As shown in Fig. 2, the method of this embodiment can include:
S210: in response to the effect triggering operation for enabling the target image effect, acquiring the image to be processed corresponding to the target image effect.
S220. if the image to be processed is detected as including the first target object and the second target object, replacing the color of the second target object by the color of the first target object, or fusing the color of the first target object to the color of the second target object.

In this embodiment, a color can be determined in the first target object and displayed on the second target object. For example, the center pixel point of the first target object can be determined, and the color of the center pixel can be used as the color of the first target object. The advantage of using the color of the center pixel of the first target object as the color of the first target object is reducing the calculation amount of determining the color, while it is capable of avoiding the color interference of the object adjacent to the first target object, which results in the failure to achieve the target image effect or displaying the colors of the adjacent objects on the second target object.

For a first target object with a regular shape, such as the object with a circular, a rectangular, a trapezoid, etc., the center pixel point can be a pixel point in the first target object with the same distance from the periphery of the first target object; for example, when the first target object is a circular object, the center pixel point is the center of the first target object. In addition, according to the actual application, those skilled in the art can also use the colors corresponding to the pixel points such as the center of gravity, the vertical center and the inner center of the first target object as the color of the first target object, which is not limited in this embodiment. For the first target object with irregular shape, the frame with regular shape can be adopted to frame the first target object, for example, the first target object is framed by the frame such as an inscribed circle and an inscribed rectangle of the first target object; the pixel such as the center of gravity, the vertical center and the inner center of the frame with regular shape can be determined as the center pixels; or, the equal-area dividing line of the first target object can be determined, the first target object can be divided into two equal-area parts, and the midpoint of the equal-area dividing line can be determined as the center pixel point.

In this embodiment, an example of determining the center pixel point of the first target object includes: segmenting the first target object from the image to be processed to obtain a target segmented image and determining the center pixel point of the first target object according to the target segmented image.

The target segmentation image includes the image obtained after the first target object is segmented, and the center pixel point of the target segmentation image is determined as the center pixel point of the first target object. For example, an image segmentation algorithm or a neural network model trained in advance can be used to segment the image to be processed. For example, the image segmentation algorithm can include the image edge segmentation algorithm, the region-based segmentation algorithm and the image threshold segmentation algorithm. For example, the image edge segmentation algorithm, such as the Canny edge detection, the Sobel edge detection can be used to segment the first target object.

In an embodiment, the mode to determine the color of the first target object can further include: traversing to read the color value of each pixel in the target region of the first target object, and according to calculating an average value of color values of all of the pixel points in the target region, using a color corresponding to the average value as the color of the first target object.

The target region can be preset according to the actual application requirements, and the region corresponding to any shape at any position of the first target object can be used as the target region. For example, a rectangular region, a trapezoidal region, a circular region or an irregular region with a preset area value in the first target object is used as the target region. The number of pixel points contained in the target region is less than or equal to that of the first target object.

For example, the target region can be a range consisting of a preset number of pixels closest to the center pixel point of the first target object, for example, the target region can be set as a square region consisting of eight pixel points closest to the center pixel point; the target region can also be an region consisting of five pixels, namely, two pixels adjacent to the center pixel in the horizontal and vertical directions and two pixels adjacent to the center pixel in the vertical direction.

For example, in order to reflect the color of the target region more accurately and comprehensively, the average value of the color values of all pixels in the target region can be used as the color value of the first target object. For example, an average value of the color values of a square region consisting of eight pixel points closest to the center pixel point and the center pixel point can be determined, and the average value can be determined as the color of the first target object.

In this embodiment, after determining the color of the first target object, the color of the first target object can be displayed on the color of the second target object in two modes: the color replacement or the color fusion. The steps of the two display modes are as follows:
When the color replacement mode is adopted, one type of implementation is: clearing the color of the second target object and re-adding it to the second target object according to the color of the first target object to replace the color of the first target object.

When the color fusion mode is adopted, one type of implementation is: determining the first color value of the first target object, traversing each pixel in the second target object, respectively determining the second color value of each pixel, and fusing the first color value with the second color value to obtain the fused color value of the pixel of the second target object. For example, fusing the first color value with the second color value can be performing the multiplication calculation, the addition calculation, the multiplication and addition mixed calculation, etc. to the first color value and the second color value. It is also possible to assign weights to the first color value and the second color value respectively and obtain the fused color value by weighted summation or weighted product. By adjusting the weights of the first color value and the second color value, the color result displayed on the second target object is enriched.

In this embodiment, the color effect displayed on the second target object is further enriched by two modes of color replacement or color fusion, and the interest in image display is improved; moreover, by segmenting the first target object, the color of the first target object can be determined more accurately and efficiently.

### Embodiment 3

Fig. 3 is a flow chart of a method of image processing provided by Embodiment 3 of the present disclosure; on the basis of any embodiment of the present disclosure, after displaying the color of the first target object on the second target object, this embodiment further includes: acquiring a preset color adjustment grayscale image and displaying the color adjustment grayscale image on the second target object. In an example, in order to improve the smoothness of the second target object, after displaying the color of the first target object on the second target object, the Gaussian blur processing is performed on the second target object. In an example, in order to enhance the color display result of the second target object, a target filter result can be added to the second target object.

The explanations of terms that are the same as or corresponding to the above-mentioned embodiments are not repeated here.

As shown in Fig. 3, the method of this embodiment can include:
S310: in response to the effect triggering operation for enabling the effect of the target image, acquiring the image to be processed corresponding to the effect of the target image.
S320: if the image to be processed is detected as including a first target object and a second target object, displaying the color of the first target object on the second target object.
S330: acquiring a preset color adjustment grayscale image and displaying the color adjustment grayscale image on the second target object.

In order to enrich the display result of the second target object and make the image to give more layered feeling, the color adjustment grayscale image can be displayed on the second target object. The color adjustment grayscale image can include two or more grayscale values, and the range of grayscale values is [0, 255]. The color adjustment grayscale image can be obtained by adjusting the light transmittance of each part of a pre-stored black picture.

For example, the color adjustment grayscale image can only include two parts with a grayscale value of 255 and a grayscale value of 0, and the color adjustment grayscale image can be divided into two parts, black and white, and the black and white parts in the color adjustment grayscale image can be superimposed with the color of the second target object, so that the second target object can be displayed with a more layered feeling. The color adjustment grayscale image can also include more than two grayscale values, and the color adjustment grayscale image is composed of gray scales.

In this embodiment, the display shape of the gray scale in the color adjustment grayscale image can be adjusted, so as to enrich the layered distribution when the second target object is displayed. For example, each gray scale in the color adjustment grayscale image includes a corrugated, strip-shaped and ring-shaped display form, and the color adjustment grayscale image is obtained by splicing gray scales of different shapes.

In this embodiment, the gray scale distribution in the color adjustment grayscale image can also be set, so as to enrich the layers of the second target object when displaying. For example, according to the order of grayscale values of gray scales from large to small, the color adjustment grayscale image can be spliced in sequence, and after the color adjustment grayscale image is superimposed, the regular change of the grayscale values of the color of the second target object is obtained; the corresponding gray scales can also be spliced to constitute the color adjustment grayscale values according to the interval order "large small large small" of gray values, and the contrast of the second target object is enhanced after the color adjustment grayscale image is superimposed. In an example, the gray scale distribution can also be determined according to the background scene of the image to be processed. For example, if the background scene of the image to be processed is an outdoor scene in the daytime, the gray scale distribution in the color adjustment grayscale image can be adjusted according to the distribution mode when sunlight is scattered. If the background scene of the image to be processed is the indoor scene of the lamp, the gray scale distribution in the color adjustment grayscale image can be adjusted to according to the light wave mode formed when the light is irradiated, so that the second target object can be better fused with the shooting scene when it is displayed.

S340: performing Gaussian blur processing on the second target object.

In order to make the image of the second target object smoother and softer and reduce the image noise, Gaussian blur processing can be performed on the second target object. For example, the second target object can be convolved with Gaussian distribution to obtain an image obtained by performing Gaussian blur processing on the second target object.

S350: adding a target filter result to the second target object.

The filter is used to achieve various special results of images, and the target filter result can be the filter result specified by the user.

For example, after the color of the first target object is displayed on the second target object, image decoration information can be generated on the application display interface to provide various special results that can be applied to the second target object for the user to select. When the target filter operation for enabling the target filter result is detected, the special result corresponding to the target filter operation can be determined as the target filter result among respective special results.

For example, the target filter result can include at least one selected from the group consisting of a variegated filter, a distortion filter, an extraction filter, a rendering filter, a liquefaction filter, and a blur filter. Among them, the variegated filter is used to correct the defects in image processing, such as removing spots and adding variegated colors; the distortion filter is used to deform and distort the selected region in the image to create a three-dimensional result or other overall changes; the extraction filter is used for matting, for example, it can extract the scattered hair in the complicated background; the rendering filter is used to create texture fills to produce similar 3-D lighting result; the liquefaction filter can be used to push, pull, rotate, reflect, fold and expand any region of the image to decorate the artistic result of the image; the blur filter can be used to blur regions in an image that are too clear or have too strong contrast.

The corresponding embodiment of the method of image processing has been described above, and an exemplary application scene is given below.

When a user shoots an interesting image through the video shooting application, he/she can click on the logo showing the "∘" shape that starts shooting in the display interface of the video shooting application, and acquire the image to be processed provided by the user, which contains the user's face avatar and background, in the form of real-time shooting; the image effect control that can be used for image processing of the image to be processed can be displayed at the bottom of the application display interface. The user can trigger his/her favorite image effect control by clicking on the screen, gesturing at a distance or voice control, so as to enable the corresponding effect. For example, the effect can include A effect for changing the color of the target object, B effect for deforming the face of the target object, C effect for changing the gender of the face in the image to be processed, D effect for predicting the age of the person appearing in the image to be processed, etc. The name identification controls and/or image identification controls of A effect, B effect, C effect and D effect can be displayed below the application display interface respectively. When the name identification controls and/or image identification controls is detected as being triggered, the corresponding effect is enabled.

For example, the function of the target image effect is that the color of the first target object in the image to be processed can be superimposed and displayed or replaced or displayed on the second target object in the image to be processed. When it is determined that the user selects the target image effect, the target image effect can be determined as the target image effect proposed in this embodiment. In an example, the user can be prompted to select the first target object and the second target object in the displayed page, for example, the user selects the hand-held object as the first target object by clicking the position of the hand-held object in the image to be processed; selects the hair as the second target object by clicking on the position of the hair in the image to be processed.

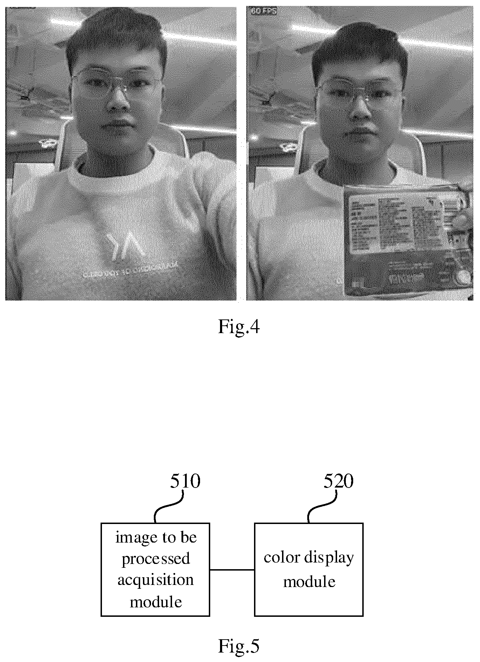

Fig. 4 is a schematic diagram for comparing the results of an image to be processed before and after processing provided by the present disclosure, wherein the left image in Fig. 4 is an image without an object in hand, and the right image in Fig. 4 is a result diagram obtained by processing the image to be processed with different hand-held objects after the user selects a target image effect.

As shown in Fig. 4, the image on the right is the result image obtained by performing effect on the target image. The hand-held object shown in Fig. 4 is a paper bag, the paper bag can be used as the first target object, and the character hair in the image to be processed can be used as the second target object. Under the function of the target image effect, the paper bag is segmented from the image to be processed by the hand-held object recognition algorithm, and the center coordinates of the paper bag are calculated. The determined center coordinates of the paper bag are deep font parts, and the font color corresponding to the center coordinates is determined as the color of the paper bag. Then, the character hair in Fig. 4 is segmented by the hair segmentation algorithm, and the color of the hand-held object is displayed on the character hair. Finally, the hair image obtained by displaying the color of the hand-held object is processed by color gradient, adding filter and Gaussian blur, and the right image in Fig. 4 is obtained. As shown in Fig.4, the paper bag contains many colors, the fonts and the periphery of the paper bag are deep, the spare part is white, and the fonts in the paper bag are deeper and darker. In Fig. 4, however, the character hair is lighter and brighter. After the font color in the paper bag is displayed on the character hair, the corresponding color of the hair becomes dark and the brightness decreases; It can be seen that the target image effect can make color interaction between objects in the image to be processed, which improves the interest of user in shooting images and the diversity of image display results.

In this embodiment, by superimposing the color adjustment grayscale image on the second target object, the layered distribution of the second target object is enriched; Through processing Gaussian blur processing on the second target object, the image of the second target object is smoother and softer when it is displayed, and the image noise is reduced; by adding the target filter result to the second target object, the image processed by the target image effect is more varied and interesting.

### Embodiment 4

Fig. 5 is a schematic structural diagram of an apparatus of image processing provided in Embodiment 4 of the present disclosure. The apparatus of image processing provided in this embodiment can be implemented by software and/or hardware and can be configured in a terminal and/or a server to implement the method of image processing in this embodiment of the present disclosure. The apparatus can include an image to be processed acquisition module 510 and a color display module 520.

The image to be processed acquisition module 510 is configured to in response to an effect triggering operation for enabling a target image effect, acquire an image to be processed corresponding to the target image effect;
The color display module 520 is configured to if the image to be processed is detected as including a first target object and a second target object, display a color of the first target object on the second target object.

On the basis of any one of embodiments of the present disclosure, the image to be processed acquisition module 510 includes:
a first image to be processed acquisition unit, configured to acquire an image uploaded or shot in a preset shooting mode by a user for applying the target image effect, as the image to be processed corresponding to the target image effect; or
a second image to be processed acquisition unit, configured to acquire each image frame in a video uploaded or recorded in real time by a user for applying the target image effect, as the image to be processed corresponding to the target image effect; or,
a third image to be processed acquisition unit, configured to acquire an image containing at least one of the first target object or the second target object in a video uploaded or recorded in real time by a user for applying the target image effect, as the image to be processed corresponding to the target image effect.

On the basis of any one of embodiments of the present disclosure, the color display module 520 includes:
a color replacement unit, configured to replace a color of the second target object with the color of the first target object; or
a color fusion unit, configured to fuse the color of the first target object to the color of the second target object.

On the basis of any one of embodiments of the present disclosure, the apparatus of image processing further includes:
a center pixel point determination module, configured to determine a center pixel point of the first target object, and using a color of a center pixel as the color of the first target object; or
an average calculation module is configured to traverse to read a color value of each pixel in a target region in the first target object and calculate an average value of color values of all of the pixel points in the target region, using a color corresponding to the average value as the color of the first target object.

On the basis of any one of embodiments of the present disclosure, the center pixel point determination module includes:
a first target object segmentation unit, configured to segment the first target object from the image to be processed to obtain a target segmented image, and determine the center pixel point of the first target object according to the target segmented image.

On the basis of any one of the embodiments of the present disclosure, the apparatus of image processing further includes:
a color adjustment grayscale image acquisition module, configured to after displaying the color adjustment grayscale image on the second target object, acquire a preset color adjustment grayscale image and display the color adjustment grayscale image on the second target object.

On the basis of any one of embodiments of the present disclosure, the apparatus of image processing further includes:
a second target object Gaussian blur processing module, configured to after displaying the color of the first target object on the second target object, perform Gaussian blur processing on the second target object.

On the basis of any one of embodiments of the present disclosure, the apparatus of image processing further includes:
a second target object adding filter result module, configured to, after displaying the color of the first target object on the second target object, add a target filter result to the second target object.

On the basis of any one of embodiments of the present disclosure, the first target object includes at least one selected from the group consisting of a hand-held object, a salient object and an image subject belonging to a first preset subject type in the image to be processed.

On the basis of any one of embodiments of the present disclosure, the second target object includes at least one selected from the group consisting of a body part of a target user in the image to be processed, a clothing of the target user, a background region of the image to be processed, and an image subject belonging to a second preset subject type.

In this embodiment, the image to be processed corresponding to the target image effect is acquired when the effect triggering operation for enabling the target image effect is triggered, and when the image to be processed is detected as including the first target object and the second target object, the display color of the second target object is changed by displaying the color of the first target object on the second target object, thus avoiding the boring and single image display mode in the related art, achieving the purpose of enriching the display color of the target object based on the target image effect, and improving the image quality.

The apparatus can execute the method provided by any embodiment of the present disclosure and has corresponding functional modules and beneficial effects.

It is worth noting that a plurality of units and modules included in the above apparatus can be only divided according to functional logic, but are not limited to the above division, provided that corresponding functions can be implemented; in addition, the names of a plurality of functional units are only for the convenience of distinguishing each other and are not used to limit the protection scope of the embodiment of the present disclosure.

### Embodiment 5

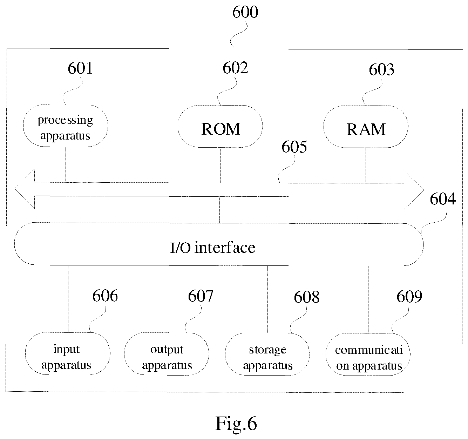

Fig. 6 is a schematic structural diagram of an electronic device provided in Embodiment 5 of the present disclosure. Referring to Fig. 6, Fig. 6 illustrates a schematic structural diagram of an electronic device (e.g., a terminal device or a server in Fig.6) 600 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 6 is merely an example and should not pose any limitation to the functions and the range of use of the embodiments of the present disclosure.

As illustrated in Fig. 6, the electronic device 600 may include a processing apparatus 601 (e.g., a central processing unit, a graphics processing unit, etc.), which can perform various suitable actions and processing according to a program stored in a read-only memory (ROM) 602 or a program loaded from a storage apparatus 608 into a random-access memory (RAM) 603. The RAM 603 further stores various programs and data required for operations of the electronic device 600. The processing apparatus 601, the ROM 602, and the RAM 603 are interconnected by means of a bus 604. An input/output (I/O) interface 605 is also connected to the bus 604.

Generally, the following apparatus may be connected to the I/O interface 605: an input apparatus 606 including, for example, a touch screen, a touch pad, a keyboard, a mouse, a camera, a microphone, an accelerometer, a gyroscope, or the like; an output apparatus 607 including, for example, a liquid crystal display (LCD), a loudspeaker, a vibrator, or the like; a storage apparatus 608 including, for example, a magnetic tape, a hard disk, or the like; and a communication apparatus 609. The communication apparatus 609 may allow the electronic device 600 to be in wireless or wired communication with other devices to exchange data. While Fig. 6 illustrates the electronic device 600 having various apparatuses, it should be understood that not all of the illustrated apparatuses are necessarily implemented or included. More or fewer apparatuses may be implemented or included alternatively.

In particular, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 609 and installed, or may be installed from the storage apparatus 608, or may be installed from the ROM 602. When the computer program is executed by the processing apparatus 601, the above-mentioned functions defined in the methods of some embodiments of the present disclosure are performed.

Names of messages or information exchanged among multiple apparatuses in the embodiment of the present disclosure are only used for illustrative purposes and are not used to limit the scope of these messages or information.

The electronic device provided by the embodiment of the present disclosure belongs to the same concept as the method of image processing provided by the above embodiments, and the technical details not described in detail in this embodiment may be found in the above embodiments, and this embodiment has the same effect as the above embodiments.

### Embodiment 6

An embodiment of the present disclosure provides a computer storage medium on which a computer program is stored. When the computer program is executed by a processor, the method of image processing provided in the above embodiments is implemented.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP) and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be contained in the above-mentioned electronic device or may also exist alone without being assembled into the electronic device.

The above computer-readable medium carries one or more programs. The one or more programs, when executed by the electronic device, cause the electronic device to:
in response to an effect triggering operation for enabling a target image effect, acquire an image to be processed corresponding to the target image effect; and
if the image to be processed is detected as including a first target object and a second target object, display a color of the first target object on the second target object.

The storage medium can be a non-transitory storage medium.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. In some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. Each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the first acquisition unit may also be described as "the unit that acquires at least two Internet protocol addresses."

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, RAM, ROM, EPROM, flash memory, optical fiber, portable CD-ROM, optical storage device, magnetic storage device, or any suitable combination of the foregoing.

According to one or more embodiments of the present disclosure, [Example 1] provides a method of image processing, which includes:
in response to an effect triggering operation for enabling a target image effect, acquiring an image to be processed corresponding to the target image effect; and
if the image to be processed is detected as including a first target object and a second target object, displaying a color of the first target object on the second target object.

According to one or more embodiments of the present disclosure, [Example 2] provides a method of image processing, which further includes:
acquiring an image uploaded or shot in a preset shooting mode by a user for applying the target image effect, as the image to be processed corresponding to the target image effect; or
acquiring each image frame in a video uploaded or recorded in real time by a user for applying the target image effect, as the image to be processed corresponding to the target image effect; or
acquiring an image containing at least one of the first target object or the second target object in a video uploaded or recorded in real time by a user for applying the target image effect, as the image to be processed corresponding to the target image effect.

According to one or more embodiments of the present disclosure, [Example 3] provides a method of image processing, which further includes:
replacing a color of the second target object with the color of the first target object; or fusing the color of the first target object to the color of the second target object.

According to one or more embodiments of the present disclosure, [Example 4] provides a method of image processing, which further includes:
determining a center pixel point of the first target object, and using a color of a center pixel as the color of the first target object; or
traversing to read a color value of each of pixel points in a target region in the first target object, and according to calculating an average value of color values of all of the pixel points in the target region, using a color corresponding to the average value as the color of the first target object.

According to one or more embodiments of the present disclosure, [Example 5] provides a method of image processing, which further includes:
segmenting the first target object from the image to be processed to obtain a target segmented image and determining the center pixel point of the first target object according to the target segmented image.

According to one or more embodiments of the present disclosure, [Example 6] provides a method of image processing, which further includes:
acquiring a preset color adjustment grayscale image and displaying the color adjustment grayscale image on the second target object.

According to one or more embodiments of the present disclosure, [Example 7] provides a method of image processing, which further includes:
performing Gaussian blur processing on the second target object.

According to one or more embodiments of the present disclosure, [Example 8] provides a method of image processing, which further includes:
adding a target filter result to the second target object.

According to one or more embodiments of the present disclosure, [Example 9] provides a method of image processing, which further includes:
the first target object includes at least one selected from the group consisting of a hand-held object, a salient object and an image subject belonging to a first preset subject type in the image to be processed.

According to one or more embodiments of the present disclosure, [Example 10] provides a method of image processing, which further includes:
the second target object includes at least one selected from the group consisting of a body part of a target user in the image to be processed, a clothing of the target user, a background region of the image to be processed, and an image subject belonging to a second preset subject type.

According to one or more embodiments of the present disclosure, [Example 11] provides an apparatus of image processing, which includes:
an image to be processed acquisition module, configured to in response to an effect triggering operation for enabling a target image effect, acquire an image to be processed corresponding to the target image effect; and
a color display module, configured to, if the image to be processed is detected as including a first target object and a second target object, display a color of the first target object on the second target object.

Those skilled in the art should understand, the scope of the disclosure involved herein is not limited to the technical solutions formed by a specific combination of the technical features described above and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while a plurality of operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, the subject matter defined in the appended claims is not necessarily limited to the particular features and acts described above. Rather, the particular features and acts described above are merely exemplary forms for implementing the claims.

## Claims

1. A method of image processing, comprising:
in response to an effect triggering operation for enabling a target image effect, acquiring an image to be processed corresponding to the target image effect; and
in response to detecting the image to be processed comprising a first target object and a second target object, displaying a color of the first target object on the second target object.

2. The method according to claim 1, wherein the acquiring an image to be processed corresponding to the target image effect comprises:
acquiring an image uploaded or shot in a preset shooting mode by a user for applying the target image effect, as the image to be processed corresponding to the target image effect; or
acquiring each image frame in a video uploaded or recorded in real time by the user for applying the target image effect, as the image to be processed corresponding to the target image effect; or
acquiring an image containing at least one of the first target object or the second target object in a video uploaded or recorded in real time by the user for applying the target image effect, as the image to be processed corresponding to the target image effect.

3. The method according to claim 1, wherein the displaying a color of the first target object on the second target object comprises:
replacing a color of the second target object with the color of the first target object; or
fusing the color of the first target object to the color of the second target object.

4. The method according to claim 1 or 3, further comprising:
determining a center pixel point of the first target object, and using a color of a center pixel as the color of the first target object; or
traversing to read a color value of each of pixel points in a target region in the first target object, and according to calculating an average value of color values of all of the pixel points in the target region, using a color corresponding to the average value as the color of the first target object.

5. The method according to claim 4, wherein the determining a center pixel point of the first target object comprises:
segmenting the first target object from the image to be processed to obtain a target segmented image and determining the center pixel point of the first target object according to the target segmented image.

6. The method according to claim 1, after the displaying a color of the first target object on the second target object, further comprising:
acquiring a preset color adjustment grayscale image and displaying the color adjustment grayscale image on the second target object.

7. The method according to claim 1, after the displaying a color of the first target object on the second target object, further comprising:
performing Gaussian blur processing on the second target object.

8. The method according to claim 1, after the displaying a color of the first target object on the second target object, further comprising:
adding a target filter result to the second target object.

9. The method according to claim 1, wherein the first target object comprises at least one selected from the group consisting of a hand-held object, a salient object and an image subject belonging to a first preset subject type in the image to be processed.

10. The method according to claim 1, wherein the second target object comprises at least one selected from the group consisting of a body part of a target user in the image to be processed, a clothing of the target user, a background region of the image to be processed, and an image subject belonging to a second preset subject type.

11. An apparatus of image processing comprising:
an image to be processed acquisition module, configured to in response to an effect triggering operation for enabling a target image effect, acquire an image to be processed corresponding to the target image effect; and
a color display module, configured to in response to detecting the image to be processed comprising a first target object and a second target object, display a color of the first target object on the second target object.

12. An electronic device, comprising:
one or more processors;
a storage apparatus, configured to store one or more programs,
wherein when the one or more programs are executed by the one or more processors, the one or more processors are caused to implement the method of image processing according to any one of claims 1 to 10.

13. A computer-readable storage medium, having a computer program stored thereon, wherein the computer program, when executed by a processor, implements the method of image processing according to any one of claims 1 to 10.
